# EUROPEAN PATENT APPLICATION

(11) **EP 3 926 463 A1**
(43) Date of publication of application: **22.12.2021**
(21) Application number: 20180673.4
(22) Date of filing: 18.06.2020
(51) Int. Cl.: G06F 8/65, H04W 4/00

(54) **SYSTEM FOR DETERMINING AVAILABILITY OF SOFTWARE UPDATE FOR AUTOMATION APPARATUS**

(71) Applicant: ABB Schweiz AG, 5400 Baden (CH)
(72) Inventor: Kohvakka, Mikko, 00380 Helsinki (FI); Kallio, Janne, 00380 Helsinki (FI); Tapaninen, Mikko, 00380 Helsinki (FI)
(74) Representative: Kolster Oy Ab

(57) **Abstract**

A system for determining an availability of a software update for an automation apparatus comprises a reader configured to read wirelessly data from the automation apparatus that is at least partly powered off, a processing circuitry configured to determine, based on the read data, the availability of the software update for the automation apparatus and a database configured to store at least update for the software. The processing circuitry is further configured, in response to the available software update, to enable the automation apparatus for receiving the update for the software.

## Description

### TECHNICAL FIELD

The present invention relates to automation apparatuses, especially a system for determining an availability of a software update for the automation apparatus.

### TECHNICAL BACKGROUND

A delivery time of the automation apparatuses from a production to a customer may be long. Respectively, software of the automation apparatus is often further developed also during the delivery time. This combination may cause many challenges because the software may be outdated when the customer receives the automation apparatus. The automation apparatus is not normally powered on until the customer receives the apparatus and hence, checking of the available software updates may be problematic. Therefore, a further sophisticated solution is clearly desirable.

### BRIEF DESCRIPTION

The present invention is defined by the subject matter of the independent claims.

Embodiments are defined in the dependent claims.

The embodiments and features, if any, described in this specification that do not fall under the scope of the independent claim are to be interpreted as examples useful for understanding various embodiments of the invention.

### LIST OF DRAWINGS

Some example embodiments will now be described with reference to the accompanying drawings, in which
FIG. 1 illustrates a system for determining an availability of a software update for an automation apparatus according to an embodiment;
FIG. 2A, 2B and 2C illustrate flow-charts of methods for determining the availability of the software update for the automation apparatus according to embodiments; and
FIG. 3A, 3B and 3C are signal sequence charts illustrating a usage of the system for determining the availability of the software update for the automation apparatus according to embodiments.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

An automation apparatus may be produced several months, sometimes even years, before a delivery to an end customer. Instead, a software used in the automation apparatus can develop all the time. This may lead the situation wherein the software is outdated when the automation apparatus is finally delivered to the end customer. The automation apparatus is normally powered off and stored in a warehouse for months before the customer delivery. Because the automation apparatus is powered off, to check an availability of the software update and/or to update the software may be challenging.

The automation apparatus (called also an apparatus later in this application) refers to automation solutions used in a different kind of industrial sectors including, but not limited to: building and facilities, cement and glass, chemicals, data center automation, energy and utilities, food and beverage manufacturing, marine vessel management, metals processing, mining and minerals processing, oil, gas and petrochemical, original equipment manufacturers, pharmaceutical and life sciences, printing newspapers, ports, pulp and paper manufacturing, road and tunnel infrastructure, water and wastewater.

The term "software" may comprise a wireframe of the apparatus in this application.

According to an aspect, there is provided a system for determining the availability of the software update for the automation apparatus, wherein the system comprises a reader configured to read wirelessly data from the automation apparatus that is at least partly powered off, a processing circuitry configured to determine, based on the read data, the availability of the software update for the automation apparatus and a database configured to store at least update for the software, wherein the processing circuitry is further configured, in response to the available software update, to enable the automation apparatus for receiving the update for the software.

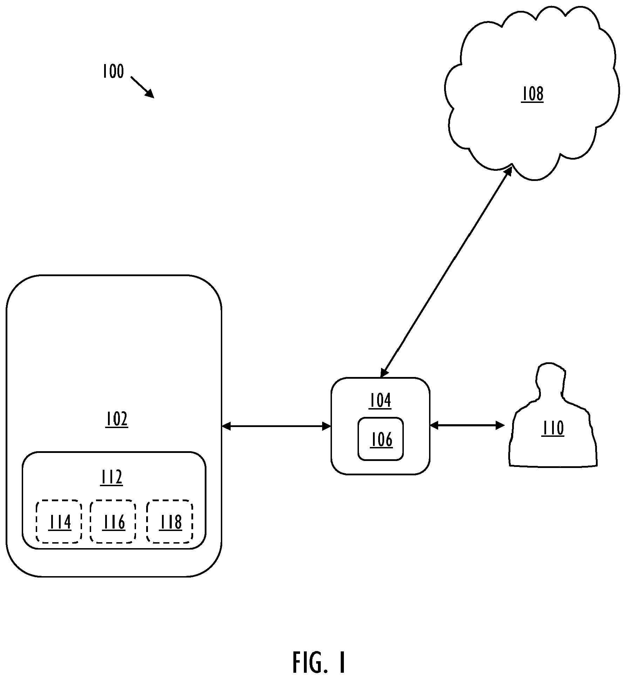

Let us study FIG. 1, which illustrates an example embodiment of the system for determining the availability of the software update for the automation apparatus. The system 100 comprises the reader 104, the processing circuitry 106 and the database 108. FIG. 1 further illustrates the automation apparatus 102 to which the system 100 may be applied and a user 110 who may operate the system and/or the reader. The automation apparatus comprises a data source 112 comprising a different kind of the data about the apparatus, wherein the reader 104 is capable of reading the data. The database 108 comprises at least update(s) for the software of the automation apparatus 102. There may be a plurality of the updates available for the automation apparatus in the database. In an embodiment, in addition to the updates, the database comprises other the apparatus related data.

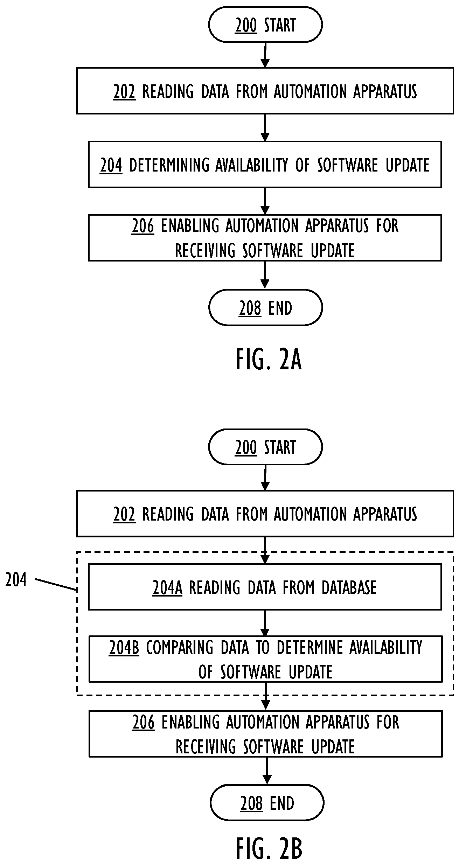

Let us now study FIG. 2A, which illustrates a method for determining the availability of the software update for the automation apparatus according to an embodiment, wherein the method comprises following steps: (block 202) reading wirelessly, by the reader, data from the automation apparatus, (block 204) determining, by a processing circuitry, based on the read data, the availability of the software update for the automation apparatus and (block 206) in response to the available software update, enabling, by the processing circuitry, the automation apparatus for receiving the update for the software.

In an embodiment, the reader, operated by the user, is configured to read wirelessly data from the automation apparatus that is at least partly powered off. The reader may be configured to read the data in vicinity of the automation apparatus, in other words, a physical contact and/or connection between the data source of the apparatus and the reader may not be necessarily needed. Hence, the reader may be capable of reading the data from the apparatus when the user sets the reader near by the apparatus.

In an embodiment, the reader is a mobile device. It may have a network connection, wherein the network connection may be for an internal network or an external network. The internal network refers to the network in which an access is limited to restricted set of users, for example, employees of a company. The external network refers to a public network like the Internet. The network connection may include a wired network such as the Internet and/or one or more wireless networks such as cellular radio networks. The reader may be configured to communicate by using one or more of the following: a wireless local area network (WLAN), a low power wide area network (LPWAN), a narrowband Internet of things (NB-IoT), a cellular radio network, a bus interface (such as an industrial communication bus), a wired communication interface (such as Ether-net), a wireless communication interface, a short-range wireless transceiver (such as Bluetooth, or Bluetooth Low Energy BLE).

The term "from the automation apparatus" does not only refer to a situation in which the data is in (inside) the automation apparatus, for example, saved in a memory of the automation apparatus, wherein the memory may be an integral part of the apparatus or an additional device. It may also refer to a situation in which the data is read from a package of the apparatus and/or a sticker attached, for example, to an outer cover or the package of the automation apparatus. Hence, reading data from the automation apparatus may also mean that the data is read from the package of the automation apparatus or from the sticker placed on the apparatus. For example, the automation apparatus may be in the package and stored in the warehouse wherein the data of the automation apparatus is read from the package. In other words, reading the data from the automation apparatus may be interpret like reading the data of the automation apparatus.

The automation apparatus that is at least partly powered off refers to a situation in which the automation apparatus is totally powered off (turned off) or some part(s) of the apparatus is/are powered on/off. For example, the automation apparatus may be stored in the warehouse and is not powered on at all when reading the data. In another example, a control panel of the (stored) automation apparatus may be powered on when reading the data while the automation apparatus itself may be powered off. Hence, when reading the data, only the control panel is powered on instead of the whole apparatus. In some case, the whole automation apparatus may be powered on when reading the data from the apparatus.

The term "update the software" may refer to change of a version and or variant of the software installed in the automation apparatus. There may be a plurality of the versions and/or variants of the software available for the automation apparatus in the database and updating of the software may refer that some certain version/variant of the available software versions/variants is installed into the automation apparatus. In other words, the update may refer to changing the version and/or variant of the software, the version and/or the version is not necessarily the latest one. For example, one certain software version may have a plurality of variants for the automation apparatus.

The data read from the automation apparatus comprises an information about the software installed in the apparatus. The information may comprise, for example, the version and/or variant of the software. Although only version of the software may be mentioned in embodiments and examples of this application, the version may still comprise also the variant of the software. Hence, version of the software mentioned in the embodiments and examples may also mean variant of the software. The processing circuitry is configured to determine, based on the read data, the availability of the software update for the apparatus. For example, the processing circuitry may determine that the version of the software is old and hence, there is the update available which is recommended to install. The processing circuitry may also determine that the software is up-to-date (or desired version) and the update is not needed.

In an embodiment, a plurality of the software versions and/or variants may be available for the apparatus in the database, wherein the version and/or variant is selected from the several available versions and/or variants. The different software versions and /or variant may have different properties such that a first available version/variant may enable some certain features for the apparatus and a second available version/variant may enable some other features. Then the version and/or variant of the software may be selected according to the desired features. The version and/or variant of the software may also be selected, for example, based on a customer (requirements). Some certain customer may require some certain software version/variant, which is/are not necessarily the latest one.

The database is configured to store at least the update(s) for the software of the automation apparatus. The database may store also other data related to the apparatus like, for example, a change log comprising a record of changes.

In response to the available software update, the processing circuitry is configured to enable the automation apparatus for receiving the update for the software. Enabling of the automation apparatus for receiving the software update may refer to all actions needed to transmit the software update from the database and/or reader into the automation apparatus. In an embodiment, the automation apparatus or a part of the automation apparatus is powered on before transmitting the software update. As described above, a part of the automation apparatus may refer to the control panel of the apparatus, for example.

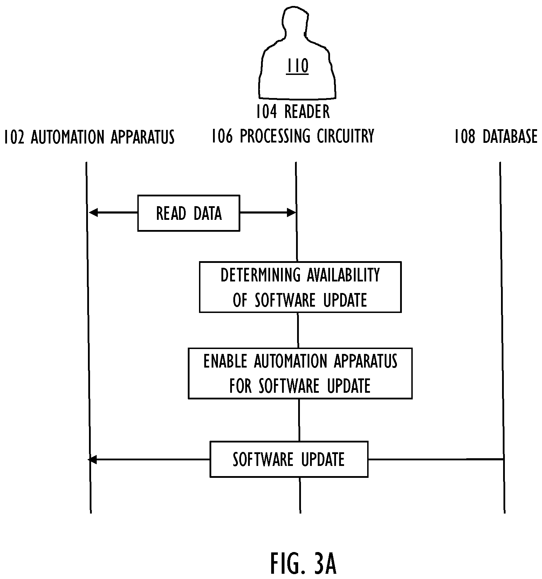

Referring to FIG 3A, which illustrates a usage of the system 100 as a signal sequence chart according to an embodiment. The user of the reader 110 sets the reader 104 in vicinity of the automation apparatus 102 that is (at least partly) powered off such that the reader 104 is capable of reading the data from the data source of the automation apparatus 112. The processing circuitry 106 is configured to process the data such that the availability of the software update(s) can be determined. If the software update is available, the processing circuitry 106 is further configured to enable the automation apparatus 102 for receiving the update. The enabling of the apparatus for receiving the update enables delivering of the software from the database 108 to the apparatus 102.

In an embodiment, the reader is configured to operate by using one of near-field communication (NFC) technology, radio-frequency identification (RFID) technology, QR-code (Quick Response code) technology, data matrix and/or bar code. In an embodiment, the reader is configured to operate by using two or more above mentioned technologies.

The next example describes how the system may implemented by using the NFC-technology. Still referring to FIG. 1, in an embodiment, the data source of the automation apparatus 112 comprises a passive electronic tag (NFC-tag) comprising a chip 114 (or an integrated circuit) and an antenna 118. A (non-volatile) memory 116 (such as a flash memory) may be implemented within the chip or coupled with the chip. The chip 114 may be configured to receive energy (for example for data processing, data transfer and memory operations) from a magnetic induction between the antenna 118 and the reader 104, receive data from the reader 104, write and read the data from/to the memory 116 and transmit data to the reader 104. The antenna 118 may be coil-shaped and made of copper or aluminium, for example. In an embodiment, the reader apparatus 104 is active, in other words, the reader 104 transmits interrogation radio signals, and may receive radio signals from the passive electronic tag 112, which is powered by the interrogation signals. The reader may be the mobile device having capability for reading the NFC-tag.

When the user of the reader (system) brings the reader in vicinity of the apparatus, the passive electronics tag harvest energy from the reader and transmit the data of the automation apparatus to the reader. Hence, the data of the apparatus may be read by using NFC-technology from the (at least partly) powered off apparatus.

In an embodiment, the NFC-tag is accessed by the automation apparatus via serial bus. The automation apparatus may be able to read the NFC-tag through the serial bus. The automation apparatus may be, at least partly, powered on when reading the NFC-tag. As described, at least partly powered on may refer that, for example, the control panel of the apparatus is powered on. The next example describes how the system may implemented by using the QR-code, data matrix or bar code. Although, the QR-code is used as an example in the next example embodiment, the data matrix and/or bar code may be applied same way. In an embodiment, the data source of the automation apparatus 112 comprises the QR-code and the reader 104 is capable of reading a content of the code, for example, by a camera. In a first example, the QR-code is presented, for example, in the display of the control panel of the apparatus. As wrote, the automation apparatus may be at least partly powered off during the reading and hence, the control panel and its display may be powered on during the reading. The QR-code may comprise the data of the automation apparatus needed for determining the availability of the software update. The reader may be the mobile device capable of reading the QR-code by the camera, for example.

In another example, the QR-code may be placed, for example, as a sticker on the apparatus or a package of the apparatus. As explained above term "reading data from the automation apparatus" should be understood broadly such that the data to be read from the apparatus is not necessarily in the apparatus. For example, in the case of the QR-code, the data (source) read by the reader may also be in the package of the apparatus or in the sticker placed in the package and/or the apparatus.

In an embodiment, the data of the automation apparatus, read by the reader, comprises at least an identification information of the automation apparatus and/or the version of the software installed in the automation apparatus. The identification information is used to identify a type the automation apparatus and to determine, based on the identification, is there the software update(s) available for that certain type of the automation apparatus. The version of the software is used to identify which version of the software is installed in the apparatus at that moment. Hence, together with the identification information and the version of the installed software, the possible software updates available for the apparatus can be determined.

In an embodiment, the identification information of the automation apparatus comprises at least one of the type, a model and/or a serial number of the automation apparatus. For example, the serial number can be used to trace when and where the automation apparatus is produced and which version of the software was installed in the production. It may also be used to define which version of the software should be installed to the apparatus at the moment. For example, the software installed in the apparatus during the production may have bugs causing issues for the apparatus and the software update is highly recommended, this can be seen when, for example, the serial number of the apparatus is known.

In an embodiment, the processing circuitry is configured to update the version of the software in the data of the automation apparatus according to the installed software update. As described, the data of the automation apparatus may comprise the version of the software installed in the apparatus and this data is updated to be accordant with the version installed into the automation apparatus. For example, if the software of the automation apparatus is updated to the latest version, the version information in the data of the automation apparatus is updated such that it is same as the actual installed version after the software update.

Let us now study FIG. 2B, which illustrates an embodiment of a step of the method in which the processing circuitry is configured to determine, based on the read data, the availability of the software update for the automation apparatus (block 204) in more detail. As described, at first the reader is used to read the data from the automation apparatus (data source), wherein the data comprises at least the identification information of the apparatus as well as the version of the installed software. After reading the data from the automation apparatus by the reader, the processing circuitry is configured to read the data from the database (block 204A). In other words, when the apparatus and its software version are identified, based on the data read from the apparatus, the processing circuitry reads data from the database.

In an embodiment, the database comprises one or more available software versions for the automation apparatus based on the identification information of the automation apparatus. For example, the data stored in the database may show that there are two updates available for the apparatus having some certain serial number. Hence, when the identification information of the apparatus is known, also the software update(s) available for the apparatus in the database is/are known.

Still referring FIG. 2B, in an embodiment, the processing circuitry is configured to compare the software version installed in the automation apparatus to the at least one available software version stored in the database (block 204B). Comparing may be performed based on the identification information of the automation apparatus. For example, when the serial number of the apparatus, or the other identification information, is known, the processing circuitry may determine which updates are available in the database for the apparatus having that certain serial number. As described, the data read from the apparatus may comprise the version of the software installed in the apparatus. When the available software update(s) is/are determined for the apparatus, the processing circuitry may further compare the version of the installed software to the version(s) available in the database. Based on comparing, it may determine is the installed software version the latest and/or desired one. For example, the comparison may show that the installed software version is not the latest and there is available the update package for the software, and the update is recommended. Respectively, it may show that the installed software version is the latest and the updates are not available or there is no needs for the update.

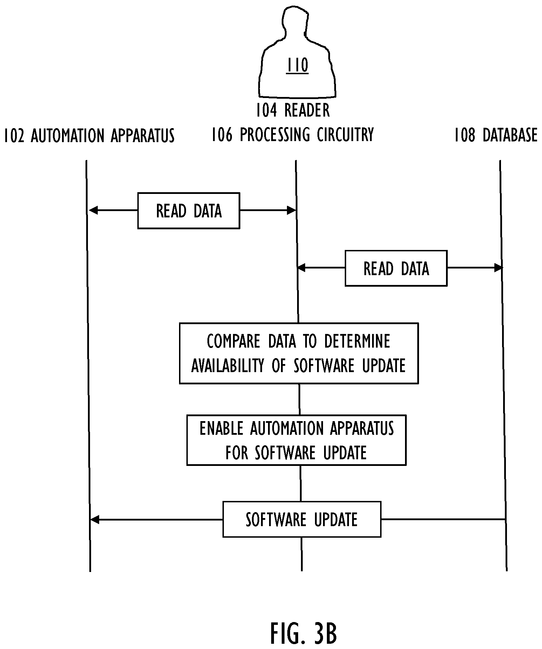

Referring to FIG 3B, which illustrates the usage of the system as a signal sequence chart according to an embodiment. After reading the data form the automation apparatus 102 by the reader 104, the processing circuitry 106 is configured to read data also from the database 108. The processing circuitry 106 is further configured to compare the data read from the apparatus 102 to the data read from the database 108 and, based on the comparison, to determine the availability of the software update for the automation apparatus 102. As described, if the software update is available, the processing circuitry 106 is further configured to enable the automation apparatus 102 for receiving the update.

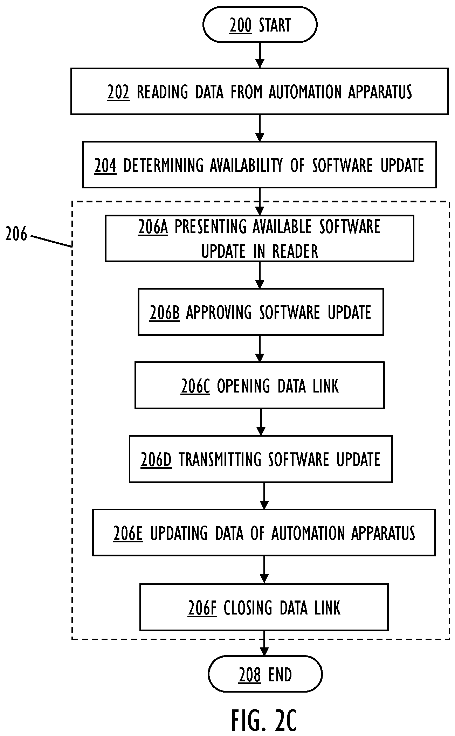

FIG. 2C illustrates an embodiment of a step of the method in which the processing circuitry is further configured, in response to the available software update, to enable the automation apparatus for receiving the update for the software (block 206) in more detail. In an embodiment, the available update for the software is presented in the reader to the user of the reader (block 206A). In addition to the update, the change log may be presented as well. As described above, the reader may be the mobile device having a display. After determining the available software update(s), the processing circuitry is configured to present the available software update(s) in the reader, for example, in the display of the reader. The user may select the software update that will be installed to the apparatus in case there are several updates available. The processing circuitry may also present, for example in the display, that the software update(s) is/are not available at that moment. It may also inform when the next version of the software may be available for the apparatus.

In an embodiment, there is presented some additional data relating to the software updates in the reader. For example, some explanations, which features are included in the different software versions. The user may use the additional data when deciding which version is installed to the apparatus. Also further instruction may be given to the user like, for example, power on the apparatus and/or turn on the Bluetooth of the apparatus.

In an embodiment, the processing circuitry is configured to request an approval of the user before enabling the automation apparatus to receive the update for the software (block 206B). As described above, the available software update(s) is/are presented in the reader for the user of the system. Available update(s) may be presented before the processing circuitry enables the apparatus to receive the update. Hence, when the available update is presented for the user, the processing circuitry is configured to request the approval from the user before enabling the software update. If there are several updates available, the user may select the update to be installed, and then approves the installation. In an embodiment, the system may request a password from the user for enabling the software update for the apparatus.

Still referring to FIG. 2C, in an embodiment, the processing circuitry is configured to open a data link between the automation apparatus and the reader when enabling the automation apparatus for receiving the update for the software (block 206C). The data line refers to a connection between two devices, in this case between the apparatus and the reader, which can be used for transmitting data. The data line can be implemented by using a plurality of known techniques. After the user approval for installing the software update, the processing circuitry is configured to open the data link from the reader to the automation apparatus for transmitting the software update.

In an embodiment, the processing circuitry is configured to receive a password from the automation apparatus for opening the data link between the automation apparatus and the reader. The password may be saved, for example, in the data source of the automation apparatus. The password may be, for example, a PIN (Personal Identification Number) code.

In an embodiment, the processing circuitry is configured to receive the password from the database for opening the data link between the automation apparatus and the reader.

In an embodiment, the data link is opened by using Bluetooth technology. The data source of the automation apparatus may comprise relevant data for forming the Bluetooth connection like, for example, Bluetooth device name, a PIN code and/or a password. Before enabling the data link, the Bluetooth connection of the automation apparatus may be turned on, for example, by the user.

Still referring to FIG. 2C, in an embodiment, the update for the software is transmitted from the database to the automation apparatus via the reader (block 206D). As described earlier, the reader may be the mobile device having the network connection. The network connection may be used to transmit the software update from the database to the reader. Hence, the software update may first be downloaded from the database to the reader and then from the reader to the apparatus, when the data link between the reader and the apparatus is enabled.

The processing circuitry is configured to update the version of the software in the data of the automation apparatus to be accordant with the installed software version (block 206E).

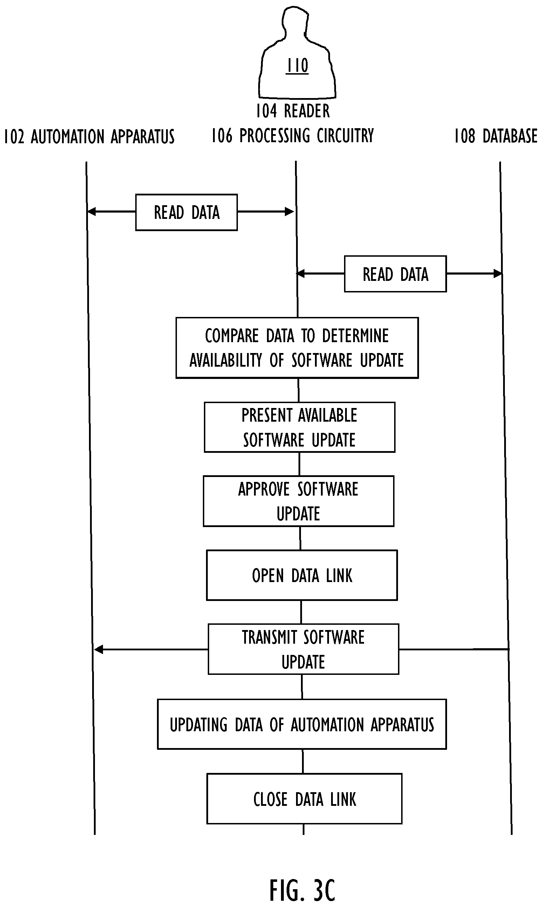

When the software update is transmitted, the data link is terminated (closed) (block 206F). The data link may be closed automatically or the user of the reader may close the data link when the update is complete. Referring to FIG. 3C which illustrates using of the system as a signal sequence chart according to an embodiment. After reading the data form the automation apparatus 102 and the database 108, the processing circuitry 106 is configured to determine, by comparing the data from the apparatus 102 and the database 108, the availability of the software update(s). If there are the available software update, the processing circuitry 106 is further configured present the available update(s) for the user 110 in the reader 104. The processing circuitry 106 may request the approval from the user 110 for enabling the automation apparatus 102 to receive the update. In response to the approval, the processing circuitry 106 is configured to open the data link between the reader 104 and the apparatus 102 for transmitting the update. The software update may be transmitted from the database 108 to the apparatus 102 via the reader 104. The processing circuitry 106 may be configured to update the software version information in the data of the automation apparatus to be accordant with the installed version after updating. When the software update is completed, the processing circuitry is configured to close the data link.

In an embodiment, the data link is time limited. For example, there may be predetermined time when the data link is open. After the predetermined time, the data link (connection) is automatically closed.

In an embodiment, the reader comprises the processing circuitry. Hence, the processing circuitry may refer to processor(s) of the reader.

In an embodiment, the processing circuitry comprises a cloud computing. The cloud computing means that the processing or a part of the processing of the data of the system is performed in the cloud. The system may also comprise a combination of the cloud computing and the processing circuitry in the reader.

In an embodiment, the database comprises a cloud server. As described, the reader may have the connection to the external network like, for example, to the Internet. Hence, the reader may have the wireless connection to the cloud based database for transmitting the data between the reader and the database.

In an embodiment, the database is an external memory (data storage) configured to be physically coupled with the reader. The external memory may be a memory card and/ or a memory stick, for example.

In an embodiment, the software update(s) is/are transmitted from the database to the reader (local memory) beforehand. For example, if the system (reader) is used without the network connection, the data (or part of the data) stored in the database may be transmitted to the reader beforehand in the place in which the network connection is available.

In an embodiment, the connection between the reader and the database is protected by a password. The password may be provided by the user of the system.

In an embodiment, the reader comprises the database. Hence, the database may be, for example, the local memory in the reader.

In an embodiment, the processing circuitry is configured to update the version of the software into the data source of the automation apparatus after updating the software. The version of the installed software may also be saved in the data store in the database, for example, in the change log.

The system according to the invention make possible to check quickly the available software updates, for example, for the stored automation apparatuses that are powered off without powering them on. Powering on the stored apparatuses may be time-consuming process requiring a lot of resources. In the system according to the invention, the apparatuses may be powered on (at least partly) only if there is the software update available for the apparatus. Therefore, the apparatuses are not powered on in vain, if the software update is not needed.

The next simple example describes how the system according to the invention may be applied in practise. A plurality of the packed automation apparatuses may be stored in the warehouse. The apparatuses are naturally turned off. The user of the system, in other words, user of the reader set the reader in vicinity of the apparatus for determining the need for the software update. The reader may be the mobile device like, for example, the mobile phone capable of reading data from the apparatus. The data may be stored in the NCF-tag or QR-code, for example. After reading, the processing circuitry, which may be the processor of the reader, reads data from the database. The database may be the cloud based solution, for example. The processing circuitry compares the data read from the apparatus and the database for determining the available software updates for the automation apparatus. If the processing circuitry detects the available software update, it will open the data link between the reader and the apparatus, for example, by using the Bluetooth. This may require, at least partly, to power on the automation apparatus. The reader may have a network connection to the database, for example, by using the cellular radio network, which is used to transmit the update from the database to the reader. Then the software update may be transmitted form the reader to the apparatus by using the opened data link between them. The version and/or variant of the installed software may be updated into the data of the automation apparatus. After updating the data link is terminated.

The methods described in connection with Figures 2A, 2B and 2C may also be carried out in the form of a computer process defined by a computer program. The computer program may be in source code form, object code form, or in some intermediate form, and it may be stored in some sort of carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

The term 'processing circuity' refers to a device (processor) that is capable of processing data in this application. Depending on the processing power needed, the system may comprise several processors such as parallel processors, a multicore processor, or a computing environment that simultaneously utilizes resources from several physical computer units (sometimes these are referred as cloud, fog or virtualized computing environments). When designing the implementation of the processor, a person skilled in the art will consider the requirements set for the size and power consumption of the system, the necessary processing capacity, production costs, and production volumes, for example. A non-exhaustive list of implementation techniques for the processor includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

The term 'database' and/or 'memory' may refer to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

Even though the invention has been described with reference to one or more example embodiments according to the accompanying drawings, it is clear that the invention is not restricted thereto but can be modified in several ways within the scope of the appended claims. All words and expressions should be interpreted broadly, and they are intended to illustrate, not to restrict, the example embodiments. It will be obvious to a person skilled in the art that, as technology advances, the inventive concept can be implemented in various ways.

## Claims

1. A system for determining an availability of a software update for an automation apparatus, comprising:
a reader configured to read wirelessly data from the automation apparatus that is at least partly powered off;
a processing circuitry configured to determine, based on the read data, the availability of the software update for the automation apparatus; and
a database configured to store at least update for the software;
wherein the processing circuitry is further configured, in response to the available software update, to enable the automation apparatus for receiving the update for the software.

2. The system of claim 1, wherein the reader is configured to operate by using one of near-field communication (NFC) technology, radio-frequency identification (RFID) technology (118), QR-code (Quick Response code) technology, data matrix and/or bar code.

3. The system of any preceding claim, wherein the data of the automation apparatus comprises at least an identification information of the automation apparatus and/or a version of the software installed in the automation apparatus.

4. The system of claim 3, wherein the database comprises one or more available software versions for the automation apparatus based on the identification information of the automation apparatus.

5. The system of any claims of 3 - 4, wherein the processing circuitry is configured to compare, based on the identification information of the automation apparatus, the software version installed in the automation apparatus to the one or more available software versions stored in the database in the determination of the availability of the software update.

6. The system of any claims of 3 - 5, wherein the identification information of the automation apparatus comprises at least one of a type, a model and/or a serial number of the automation apparatus.

7. The system of claim 3, wherein the processing circuitry is configured to update the version of the installed software in the data of the automation apparatus according to the installed software update.

8. The system of any preceding claim, wherein the processing circuitry is configured to request an approval of a user before enabling the automation apparatus to receive the update for the software.

9. The system of any preceding claim, wherein the processing circuitry is configured to open a data link between the automation apparatus and the reader when enabling the automation apparatus for receiving the update for the software.

10. The system of claim 9, wherein the processing circuitry is configured to receive a password from the automation apparatus for opening the data link between the automation apparatus and the reader.

11. The system of claims 9 - 10, wherein the data link is opened by using Bluetooth.

12. The system of any preceding claim, wherein the update for the software is transmitted from the database to the automation apparatus via the reader.

13. The system of any preceding claim, wherein the reader comprises the processing circuitry.

14. The system of any preceding claim, wherein the database comprises a cloud server.

15. A method for determining an availability of a software update for an automation apparatus, comprising:
reading wirelessly, by a reader, data from the automation apparatus;
determining, by a processing circuitry, based on the read data, the availability of the software update for the automation apparatus; and
in response to the available software update, enabling, by the processing circuitry, the automation apparatus for receiving the update for the software.

16. A computer program product embodied on a computer-readable medium and comprising a computer program code readable by a computer, wherein the computer program code configures the computer to carry out a computer process for determining an availability of a software update for an automation apparatus, the computer process comprising:
reading wirelessly, by a reader, data from the automation apparatus;
determining, by a processing circuitry, based on the read data, the availability of the software update for the automation apparatus; and
in response to the available software update, enabling, by the processing circuitry, the automation apparatus for receiving the update for the software.
